# EUROPEAN PATENT SPECIFICATION

(11) **EP 3 911 451 B1**
(45) Date of publication and mention of the grant of the patent: **16.08.2023**
(21) Application number: 20904342.1
(22) Date of filing: 27.11.2020
(51) Int. Cl.: B42D 25/415, B42D 25/373, B42D 25/36, B05D 5/12, G06K 1/12, H04L 9/32

(54) **FABRICATION OF PHYSICALLY UNCLONABLE SECURITY LABELS BASED ON POLYMER THIN FILMS**
HERSTELLUNG VON PHYSIKALISCH NICHT KLONBAREN SICHERHEITSETIKETTEN AUF DER GRUNDLAGE VON POLYMEREN DÜNNSCHICHTEN
FABRICATION D'ÉTIQUETTES DE SÉCURITÉ PHYSIQUEMENT NON CLONABLES À BASE DE COUCHES MINCES DE POLYMÈRE

(30) Priority: 26.12.2019 TR 201921827
(43) Date of publication of application: 24.11.2021
(73) Proprietor: T.C. Erciyes Universitesi, 38039 Kayseri (TR)
(72) Inventor: ONSES, Mustafa Serdar, 38039 Kayseri (TR); TORUN, Neslihan, Talas/Kayseri (TR)
(74) Representative: Yalçiner Patent and Consulting Ltd.
(86) International application number: PCT/TR2020/051182
(87) International publication number: WO 2021/133305

(56) References cited:
- EP-A1- 0 583 709
- EP-A1- 2 226 745
- WO-A1-2012/038842
- CN-A- 110 569 948
- CN-A- 110 569 948
- US-A1- 2013 293 884
- US-B1- 10 056 905

## Description

### Technical Field of the Invention

The invention is related to generation of functional patterns having random positions on surfaces, by making use of the instability of polymer thin films. The invention in particular relates to a production method of producing physically unclonable functions (PUFs) and security labels.

The invention can be used in the fields of anti-counterferiting and authentication technologies. Anti-counterfeiting and authentication technologies that are highly important for public health and economy, have a potential of usage in a wide range of areas, from daily consumption materials, to special devices and products.

### Known State of the Art (Prior Art)

Conventionally, security labels are protected with various deterministic encryption mechanisms such as barcodes. In recent years the production of deterministic barcodes with nanomaterials by using nanotechnology, and authentication of these materials that have various special properties (for example the controlling of the wavelength, irradiated depending on size), have been used during the production of these labels. These labels that are produced deterministically can be duplicated in principle. These labels can nowadays be imitated due to the growth in economy and the experience of counterfeiters.

As an example to the usage of forgery preventive and identification verification technologies, the usage of pharmaceuticals whose active agent composition has been changed and that are fake can be given, and this poses an important risk in terms of public health, and the usage of said technologies, is crucial in terms of authentication applications for secure communication and passage systems.

A technology that is being studied in the recent years for the production of labels that cannot be imitated, are physically unclonable functions (PUFs). The Physically unclonable functions, or in other words the PUFs, are based on random structures that are produced with stochastic processes. The most important feature of the PUF's is that, they cannot be duplicated by other people or producers. Due to this reason it is not possible to imitate PUF based security labels.

PUF based security labels are, basically the usage of random structures that resemble finger prints, as a sort of code. First of all a PUF label is affixed on the related product. This label is characterized in that the PUF can only be generated once and it has a structure such that it cannot even be duplicated by the manufacturer. For example if we imagine that materials (particles) that have light emitting features are covered on a surface having random positioning, the images on the surface of the particles that are irradiated can be taken and a database can be established. The crucial point for PUF's is that the created structures are random and they cannot be imitated even if it they are desired to be duplicated. As a result even if there are patterns that emit light on an imitated product, these patterns will not match the original product when compared with the database.

In another example which is related to PUF production, a microparticle can be wrinkled and artificial fingerprints can be created inside the particle. As the wrinkling stage is random and as it creates a pattern that cannot be repeated and that is unique each time, these structures can be used as PUF.

PUF's can be used in the production of security labels that prevent forgery. Particularly they can be used to determine the authenticity of valuable goods such as paintings or products that are produced with limited availability. Another field where PUF's can be potentially used is information technology.

The first study related to physically unclonable functions has been carried out in MIT University in United States of America. In this study, the concept of physically unclonable function (PUF) was set forth based on the scattering, under laser, of randomly distributed particles in a polymer matrix. In recent studies, PUF production was carried out by approaches such as, deposition of colloidal nanomaterials at low concentrations, folding of plasmonic gels, zeolites doped with lanthanide radiating in polymer films, self-arrangement of carbon nanotubes and chemical vapour deposition of two-dimensional materials.

In the patent document numbered US 10056905, nanomaterial based physically unclonable devices are described. Here, the nanomaterials are randomly positioned in a PUF layer that is placed under a general electrode. The signals received from these randomly distributed electrodes can be read as PUF keys with an integrated circuit.

The patent document numbered WO2010076733A1 is related to a semiconductor device that has been developed to be used in PUF production. A physical structure is available in the device for PUF. This structure comprises a dielectric layer that contains lead zinc titanate and silicon deposited thereon. The dielectric layer has a rough surface. A resistor having random values can be produced by depositing a conductive layer on this rough surface.

The patent document numbered CN103124979A, is based on capturing particles on a surface that has deterministic roughness and the usage of the random patterns obtained thereby, to be used in PUF production.

A method and device development for producing random codes is disclosed in the patent document numbered US20100224686A1. A mechanical apparatus with perforations is used in this patent.

Document US 2013/293884 A1 discloses a method of producing physically unclonable functions by coating on a solid surface a mixture of a polymer solution that is terminated with an -OH group and a solution of polymers that contain reactive groups.

In the studies carried out in relation to the above mentioned security labels, mostly patterning of different nanomaterials in geometrical shapes or barcodes form with deterministic processes are taken as basis. It is not possible for these security labels to be imitated due to their nature. Labels that take basis easily accessible techniques such as printing, and feasability of the production of nanomaterials with the development of nanotechnology, can be easily imitated by developed counterfeit product manufacturers.

Studies carried out with security labels that take Physically unclonable functions as basis, can be applied to a limited number of materials. As the materials that are used in labelling are limited, this not only restricts authentication mechanisms but it also reduces encoding capacity. Again, there are difficulties in the integration of PUFs on a product, produced by approaches that are based on the distribution of nanomaterials into a specific polymer matrix. To summarize, novel PUF platforms are required that are suitable for integration with different nanomaterials. These PUF platforms must be completely based on stochastic processes contrary to those applied in the prior art, and their random patterns need to be suitable for easy production without necessitating a complex infrastructure. These platforms can be integrated with deterministic barcoding processes if required.

Dewetting in polymer films is the phenomenon of the thin polymer layer covered on the surface to cut off its relation with the surface it is located on, and for said layer to change from the layer form into random droplets. Randomly positioned droplets are formed based on the interaction between the polymer layer and the surface on which it is located, thanks to dewetting, which is a kind of instability. Dewetting is a phenomenon that is generally undesired and methods that reduce the instability of dewetting are being developed. By controlling the dewetting instabilities through external factors such as templates, regular and periodical patterns can be generated on the surface. These fabricated patterns are promising for several different application fields from the production of electronic devices to biotechnology.

Fabrication of PUF based security labels that rely on dewetting instabilities have not been encountered in the prior art. The important problems faced during the production of PUF based security labels can be summarized as follows; complex methods are used in the technique, authentication is performed with limited techniques, random structures are formed only at limited areas, the structures that are produced are weakly bonded to the surface they are located on. Fabrication methods of novel PUF based security labels are required where said problems are overcome.

### Brief Description of the Invention and its Aims

A method according to the invention is defined in claim 1.

Preferred embodiments are defined in the dependent claims.

The method used in the production of PUF based security labels can make use of the instabilities of polymer thin films, and it can pattern different materials in a randomly positioned manner by chemically and strongly bonding onto the surface. The method can be used easily in large areas and allows reliable formation of the PUF database. The method has the advantage of being compatible with different authentication mechanisms such as optic microscopes, fluorescent microscopes, Raman spectroscopy and dark field scattering.

The invention differs from the prior art, in that it allows the patterning of all kinds of nanomaterials in the form of PUF, in other words the random positioning of the nanomaterial on a surface, and in that the production can be applied with easy steps such as coating onto the surface and as heating. At the same time, it meets the requirement of novel PUF platforms that are suitable for integration with different nanomaterials.

The invention basically comprises the conversion of the film into randomly positioned droplets by means of the dewetting instabilities thereof, by coating the polymer thin film onto a surface and by heating it. These instabilities that are not desired in several applications present a perfect platform for PUF fabrication. The dewetting instabilities, previously known to be used in nanotechnology, are used for the first time in PUF production with the invention. As dewetting instabilities can be observed with every polymer, the invention makes it possible to produce dewetting instabilities with all kinds of chemical structures on solid material surfaces such as glass, silicon wafer, and metal. This chemical diversity enables almost all nanomaterials (e.g. metallic nanoparticles such as gold, silver, light emitting perovskite nanomaterials, light emitting quantum dots such as cadmium sulphide nanoparticles, silicon nanoparticles) to be bonded to this platform. Therefore, it is possible to provide unique encryption and authentication mechanisms with properties such as unique radiation, light scattering and other similar features provided by different nanomaterials. The availability of different authentication mechanisms shall both provide easy usage and increasing of security layers.

An important advantage of the invention is the length scale of the random functional patterns that have been obtained by dewetting instabilities. As the distance between the patterns is at micrometer level, this makes it possible to easily authenticate the produced PUFs by optical methods. The length scale between the patterns being at micrometer level is made possible by controlling the thickness of the polymer thin film, the molecular weight of the polymer, and the interaction of the polymer with the bottom surface. On the other hand, another advantage of the method is that the process parameters primarily being the film thickness of the polymer mentioned above that have pattern sizes at micrometer lever, the molecular weight of the polymer, and heating temperature can be controlled at a broad range.

### Definition of the Figures of the Invention

**Figure 1****:** Dewetting instabilities and PUF production.
**Figure 2****:** Optical microscope images obtained as a result of heating the films that comprise different amounts of poly(2-vinylpyridine) at 200°C and 250°C.
**Figure 3****.** The change of the a) diameter and b) distance between the closest neighbours prior to heating as a function of the film thicknesses of PUF's that are obtained as a result of heating said films that comprise different amounts of poly(2-vinylpyridine) at 200°C and 250°C's.
**Figure 4****.** Optical microscope images following the selective binding of gold nanoparticles on randomly positioned poly(2-vinylpyridine).
**Figure 5****.** Determination of PUFs with Raman mapping. Deposition of rhodamine 6G on PUF's that have been functionalized with gold nanoparticles and following this the determination of PUF's with mapping that takes as basis the characteristic vibration band of the rhodamine molecule.
**Figure 6****.** The PUFs obtained by the treatment of gold nanoparticles of different sizes at different times. a) The optical microscope (top) and Raman mapping (bottom) images of gold nanoparticles of different sizes (particle size is illustrated on the picture), b) Raman spectra, c) The optical microscope (top) and Raman map (bottom) images of PUF's obtained with the treatment of gold nanoparticles at different times (treatment time is illustrated on the picture), d) Raman spectra.

### Definitions of the parts/aspects/sections forming the invention

**1:** Polystyrene (a polymer that is terminated with an -OH group and that has a water contact angle of at least 60 degrees when coated onto the surface)
**2:** Silicon Substrate (Solid surface)
**3:** Polystyrene film coated silicon substrate (a solid surface coated with a polymer thin film that is terminated with an -OH group and that has a water contact angle of at least 60 degrees when coated onto the surface)
**4:** Poly(2-vinylpyridine) (P2VP) polymer (Polymer containing reactive groups )
**5:** Poly(2-vinylpyridine) (P2VP) coated silicon substrate that was formerly coated with polystyrene film (a solid surface coated with polymers comprising reactive groups that were formerly coated with polymer film that is terminated with an -OH group and that has a water contact angle of at least 60 degrees when coated onto the surface)
**6:** Randomly positioned polymer structures, patterns (Physically unclonable functions)

### Detailed Description of the Invention

The method of the invention is related to creating functional patterns having random positions on surfaces, by making use of the instability of polymer thin films. The basis of the method for this purpose is to provide the coating of a polymer film on a surface modified with polymers that are terminated with an -OH group and the formation of random patterns by, heating the polymer film at a temperature between 120°C and 300°C, which is above the glass transition temperature or by, annealing in a solvent environment.
2 main approaches can be used in the functionalization/modification of random patterns with nanomaterials, colouring agents, particles that provide light scattering.

In the first approach, after random patterns are formed with dewetting instabilities, the materials are bound to these patterns or the materials are selectively grown on these patterns. In order for the materials to selectively bind, it needs to chemically or electrostatically bind to the poly(2-vinylpyridine) located on the surface. Accordingly, the material needs to have chemical groups that can interact with the polymer. Negatively charged materials bind to poly(2-vinylpyridine) electrostatically. In order to grow the material, the surface comprising the patterns is immersed into a reactive solution and thus the material is deposited on the pattern in the solution. Metallic nanoparticles are produced on the surface by immersing them in a solution comprising metal salt, such as for example silver nitrate, and thereby reducing the metal salt in the solution.

In the second approach however, functional materials are doped into the polymer thin film and dewetting instabilities are established with doped film.

### Exemplary application 1

In an example that comprises the production of the invention with the above described first approach, first of all a thin polymer film is coated onto the surface of the silicon substrate and thereby the surface is modified and as a result the top of the surface is functionalized. The polymer film coating thickness must be within the range of 1-100 nm. As the film gets thicker, dewetting does not occur. Substrates such as silicon wafers, glass or other substrates formed of solid materials can be used. For this purpose, the polystyrene (PS) (molecular weight 20000 g/mol) material, which has a hydroxyl terminated functional group, having a hydroxyl group to the carbon atom at one end of the polymer, is spin-coated onto the surface. Instead of polystyrene, it is possible to use other polymers having a hydroxyl group bonded to the carbon atom at one end of the polymer, which has a water contact angle of 60 degrees when coated onto the surface.

The coating process is primarily carried out physically. The coating process can be carried out by means of a solution that is established with the dissolving of polystyrene such that it forms a toluene solution that is 0.5-5% by weight. It is possible for the coating process to be carried out by means of spray coating or by dripping method besides spin coating.

As a result of a subsequent heating process, the covalent bonding of the polymer to the surface is performed with the condensation reaction between the hydroxyl group at the end of the polymer and the silanol group on the silicon substrate surface. After washing the residual polymer in toluene a thin polymer film layer is obtained on the surface (such that it shall have a thickness that is lower than 100 nm). The thickness of the polymer film depends on the molecular weight of the polymer that is used, its heating time and temperature. For example a film that is 6 nm thick is obtained by heating polystyrene that has a molecular weight of 20000 g/mol at 250°C for 5 minutes. This is exemplary to a polymer film layer where random patterns are formed by the functionalization of the polymer film substrate surface and the successive dewetting instability. The heating conditions following the coating can vary between 120-300°C.

A thin film (such that it shall be lower than 50 nm) is coated onto the surface with poly(2-vinylpyridine) (P2VP) in order to establish random patterns with dewetting instability. It is possible to use besides poly(2-vinylpyridine), poly(4-vinylpyridine) or other polymers that comprise reactive groups. P2VP polymer was preferred as it is known that nanomaterials can be bonded thereto. This coating is performed by spin coating with N,N dimethylformamide (DMF) solution comprising 0.25% to 3% by weight of poly(2-vinylpyridine). It is possible for the coating process to be carried out by means of spray coating or by dripping method besides spin coating.

By a heating process (for example 5 minutes at 250°C) applied following the coating process, dewetting instabilities and random poly (2-vinylpyridine) patterns are created on the surface. The heating time (30 seconds to 24 hours), temperature 120°C to 300°C and the medium (air, vacuum, argon or nitrogen gas) can be changed and these changes are effective on the distance between the created patterns and the pattern sizes.

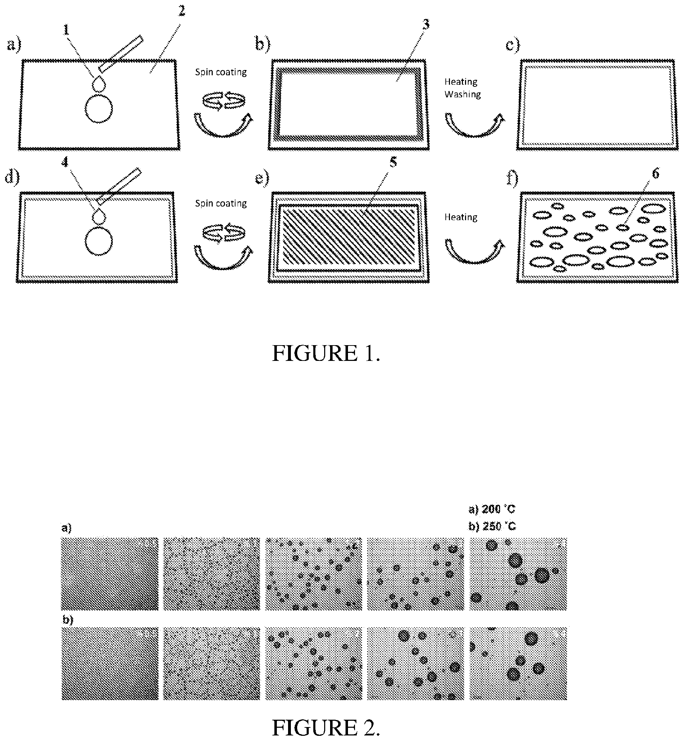

A schematic view related to dewetting instabilities and PUF fabrication is given in Figure 1. As it has been illustrated in Figure 1, the fabrication of random patterns on a surface and the dewetting instabilities are schematically described. a) Accordingly first of all end functionalized polystyrene is spin coated on a silicon substrate. b) The polystyrene coated silicon substrate is heated for 5 minutes at 250°C As a result the polystyrene is chemically bonded from its end onto the surface. c) The excess residual polymer that has not reacted is removed from the surface by the washing of the substrate in a toluene solvent and as a result a film is formed on the surface that has a thickness less than 10 nm and that is bonded onto the surface chemically. d) Poly(2-vinylpyridine) is spin coated onto this film. e) After this film is heated at a high temperature (for example for 5 minutes at 250°C) randomly positioned polymer structures are obtained on the surface. After the desired nanomaterials are selectively bonded on these structures, it is enabled for the nanomaterials to be deposited on the surface in a randomly positioned manner. Poly(2-vinylpyridine) film is coated onto the surface on a surface that is grafted with polystyrene and following the heating process randomly positioned P2VP points (random patterns) are created on the surface.

The optical microscope images of the produced random patterns, in other words PUF's have been given in Figure 2. In the figure the percent by weight of the P2VP in the solution prior to coating is given. According to this, it is observed that the polymer patterns that are randomly positioned are produced on the surface. Together with the increase of the P2VP amount in the coated solution, increase in size of the patterns can be seen. It is observed that the patterns that are formed at temperatures between 200°C and 250°C show similarities in terms of size and distance between them.

Poly(2-vinylpyridine), can go into electrostatic interaction with many materials due to the pyridine group it contains and by means of this property, it carries a universal surface modifying (functionalizing) character. The production of the random patterns that are produced with dewetting instabilities with poly(2-vinylpyridine) provides a perfect platform for functionalization with different materials. To achieve functionalization, the material needs to be electrostatically bonded onto the surface or the patterns chemically or electrostatically. Accordingly, the material that is used for functionalization needs to have chemical groups that can interact with the polymer. In this example, materials with negatively charged surfaces bond to poly(2-vinylpyridine) electrostatically.

It has been noted that the PUF's that are formed of poly(2-vinylpyridine) polymer and established with dewetting instabilities (spherical gold nanoparticles, spherical silver nanoparticles, CdSe quantum dots, platinum nanoparticles, titanium dioxide nanoparticles and gold nano-rods) can be functionalized.

This functionalization is achieved by dripping of the solution containing nanomaterials onto the substrate comprising PUF's, leaving it to rest for 30 minutes to 3 hours, and following this, washing with water under sonication. It has been determined that silver nanostructures can be grown selectively on the PUF's formed of poly(2-vinylpyridine) material.

PUF's that have been functionalized with nanoparticles can be authenticated in different ways. Polymer patterns that are formed with dewetting instabilities can be seen directly under a light microscope. This viewing process can also be carried out with lenses that are integrated to a smart phone.

The PUF's that have been functionalized with gold and silver nanoparticles increase Raman scattering with the plasmonic effects that these nanoparticles have. This situation that is known as the surface enhanced Raman scattering (SERS) can increase the signal intensities of the molecules to very high levels in Raman spectroscopy. When organic molecules (for example, 1mM rhodamine 6G) are deposited on the PUF structures produced with the invention, Raman signals are selectively received on the randomly positioned PUF structures. When mapping images are taken in Raman spectroscopy, signals are obtained only from PUF's.

A database is formed with the obtained mapping images and thereby authenticity can be confirmed when compared with a different pattern. Besides the image obtained by mapping, here the energy range at which the signal is obtained and the intensity of the signal also constitutes an encryption layer. The energy range at which the signal is obtained changes, depending on the molecule (for example rhodamine 6G) that is used. The PUF's in the Raman mapping image, can be seen only at the energy ranges of this molecule. As the used molecule is determined by the manufacturer, the related energy range also constitutes an encryption mechanism. Even though fake products have the same patterns under an optical microscope, as a Raman image will not be able to be obtained, the authenticity of the product can be confirmed. The changes in irradiation intensity can also act as an encryption mechanism. Encryption could be carried out by receiving a signal on the same surface from different points and at different intensities. When considering a situation in which a low amount of signal is obtained from one pint and a high amount of signal is obtained from the other point of the two points having the same image under an optical microscope, the radiation intensities will also constitute an extra security layer.

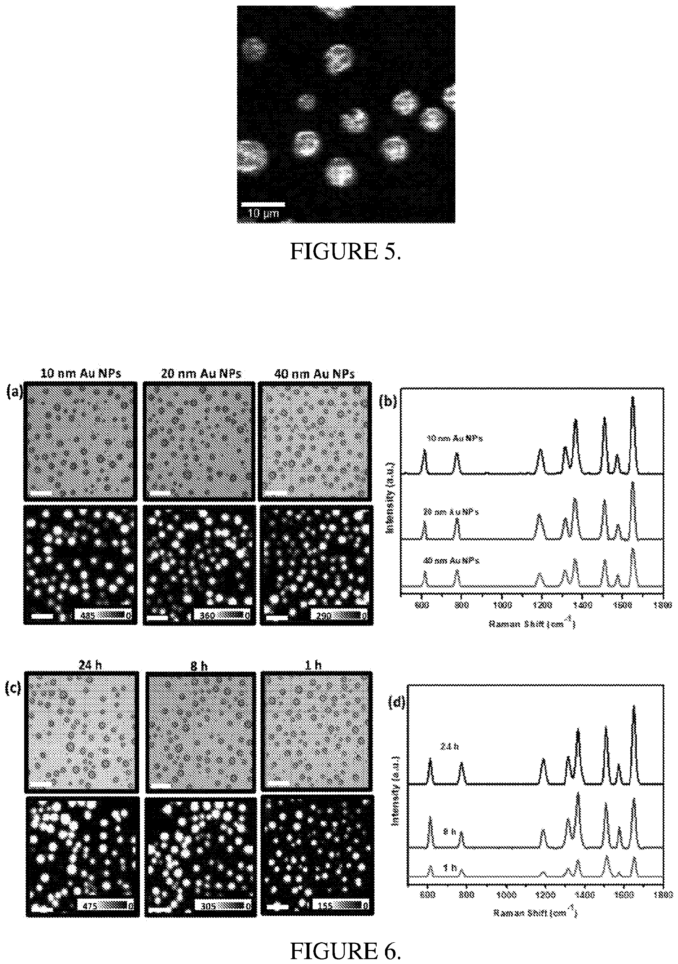

The Raman map images obtained through the property of gold nanoparticle deposited PUFs in increasing the Raman scattering effects have been illustrated in Figure 5. These images can function as security labels. A database can be obtained that is formed of these images. Thus, the authenticity of the product is confirmed by comparing this image with the image obtained on a fake product. Figure 6 shows the PUFs that are obtained by the treatment of gold nanoparticles of different sizes at different times.

PUF's functionalized with nanomaterials that have fluorescent properties can be viewed under a fluorescent microscope. This viewing process can also be carried out with lenses that are integrated to a smart phone. Nanomaterials with fluorescent properties can be quantum dots, biomaterials such as dye-labelled DNA and protein.

### Exemplary application 2

In an example that comprises the manufacturing of the invention with the second approach that was described above, the PUF's are obtained by adding nanomaterials or dyestuff into the polymer film during the production of the random patterns at the solution stage, and following this by dewetting instability. In this example, when the substrates that are formed of silicon and other solid materials is coated on a surface, and where a hydroxyl groups is bonded to the carbon atom at the end of the polystyrene (PS) or polymer, after they are coated with other polymers having a water contact angle of at least 60 degrees, and are heated, dyestuff (for example: rhodamine, methylene blue, green radiating protein) mixtures with poly(2-vinylpyridine) are mixed in DMF and in order to establish random patterns with dewetting instabilities, the composite thin film (<50 nm) comprising P2VP and dyestuff are coated onto the surface that is coated thereon with PS. All kinds of metal, metal oxide and polymer film can be used as surfaces. This coating is performed by spin coating with DMF solution comprising 0.25% to 3% by weight of poly (2-vinylpyridine). It is possible for the coating process to be carried out by means of spray coating or by dripping method besides spin coating.

By a heating process (for example 5 minutes at 250°C) applied following the coating process, dewetting instabilities and random poly (2-vinylpyridine) patterns are created on the surface. In order for the materials that are doped into the polymer to not lose their radiation properties, the heating medium (air, vacuum, argon and nitrogen gas) is important. The property of radiation can be maintained by carrying out a heating process in mediums that are devoid of oxygen and humidity. Different nanomaterials can be used, such as quantum dots, perovskite nanocrystals, carbon dots etc., as irradiating material.

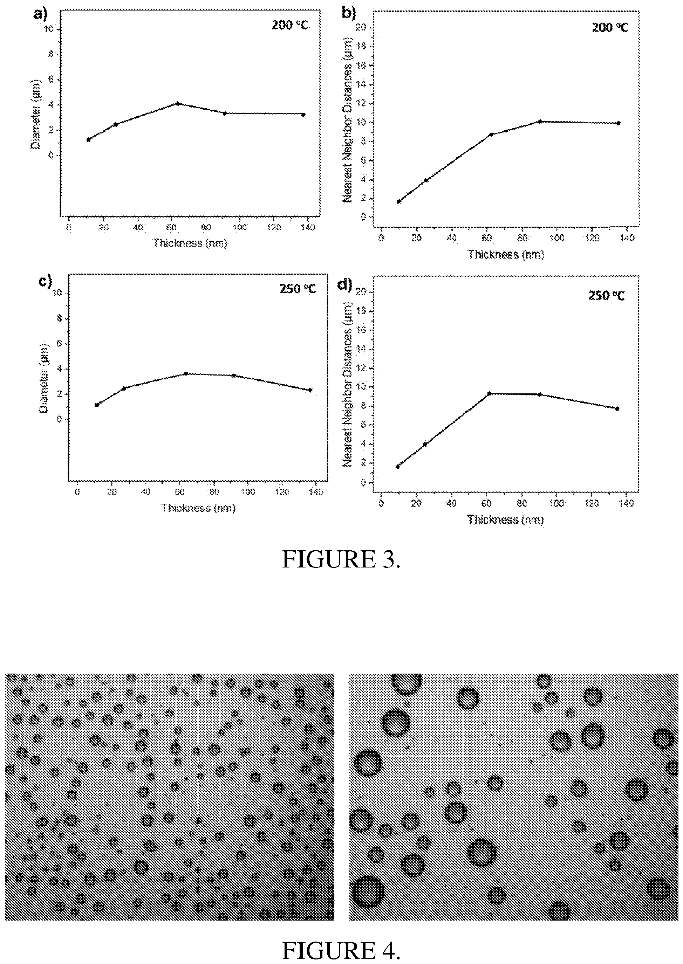

The size distributions of PUF's obtained with dewetting instabilities that are formed by heating and coating solutions comprising different amounts of poly(2-vinylpyridine), have been give in Figure 3, as a function of the film thickness prior to heating. It can be seen in the Figure, that the pattern sizes and the distances between the patterns, can be controlled with the thickness of the coated poly(2-vinylpyridine) film. It is observed generally that the pattern size and the distance between the patterns increase as the thickness of the poly(2-vinylpyridine) film increases and after a certain thickness, that a significant change cannot be seen.

It has been illustrated in Figure 4 that the randomly positioned patterns can be functionalized by depositing nanoparticles on the produced PUF's. It is observed that patterns with different sizes and random positions are formed on the surface due to the nature of the dewetting instabilities. It is observed that gold nanoparticles are selectively bonded on these patterns electrostatically, and that the patterns turned into a pink colour after being bonded with gold nanoparticles.

PUF's functionalized with nanomaterials that have fluorescent properties can be viewed under a fluorescent microscope. This viewing process can also be carried out with lenses that are integrated to a smart phone. Nanomaterials with fluorescent properties can be quantum dots, biomaterials such as dye-labelled DNA and protein.

Security labels formed of PUF's are produced with the invention. These labels can be affixed on all kinds of products and they enable the protection of the authenticity of said products.

## Claims

1. A production method of producing Physically unclonable functions (PUFs) and security labels, wherein it comprises the process steps of,
i. Coating on a solid surface (2) such as to have a thickness between 1-100 nm in order to create a film with the polymer solution (1) that is terminated with an -OH group, whose water contact angle is at least 60 degrees when coated onto the surface,
ii. Heating the polymer film that has been coated on the surface in order for it to bond with a covalent bond onto the solid surface (2),
iii. Coating the solid surface (2) that has been coated with polymer film, with a solution of the polymers (4) that contain reactive groups, to have a thickness of 1-50 nm,
iv. Creating a physically unclonable function on the surface by heating the solid surface that has been coated with a polymer solution (4) containing reactive groups, that was previously coated with a polymer film,
v. Bonding the chemical groups to interact with the polymer, comprising nanomaterials, biomaterials, dyestuff or particles that provide light scattering, to physically unclonable functions (6) chemically or electrostatically, and establishing security labels from the images obtained by unique radiation, light scattering, Raman scattering, and dark field scattering that is provided by the bonded nanomaterials.

2. A method according to claim 1, **characterized in that**, in step iii., the solution having chemical groups to interact with the polymer, comprising reactive groups are additionally mixed with nanomaterials, biomaterials, dyestuff or particles that provide light scattering and then said solution is coated on the solid surface that was previously coated with polymer film.

3. A method according to claim 1, **characterized in that**, the polymer that is terminated with an -OH group and that has a water contact angle of at least 60 degrees when coated onto the surface, is polystyrene.

4. A method according to claim 1, **characterized in that**, the polymer that is terminated with an -OH group and that has a water contact angle of at least 60 degrees when coated onto the surface, is a solution that is obtained by dissolving polystyrene such as to obtain a toluene solution that is 0.5% - 5% by weight.

5. A method according to claim 1, **characterized in that**, said heating conditions are between 120-300°C.

6. A method according to claim 1, **characterized in that**, said polymer that contains reactive groups is poly(2-vinylpyridine) or poly(4-vinylpyridine).

7. A method according to claim 1, **characterized in that**, said polymer solution that contains reactive groups, is a solution that is obtained by dissolving poly(2-vinylpyridine) or poly(4-vinylpyridine) such that a N,N dimethylformamide (DMF) solution 0.25%-3% by weight is established.

8. A method according to claim 1, **characterized in that**, said coating is carried out with spray or dripping method.

9. A method according to claim 1, **characterized in that**, said nanomaterials are nanomaterials such as spherical gold nanoparticles, spherical silver nanoparticles, CdSe quantum dots, platinum nanoparticles, titanium dioxide nanoparticles and gold nano-rods or nanoparticles that have fluorescent properties.

10. A method according to claim 1, **characterized in that**, said biomaterial is protein having DNA or fluorescent properties that were marked with dyestuff.

11. A method according to claim 1, **characterized in that**, said dyestuff is rhodamine, methylene blue or green radiating protein.

12. A method according to claim 1, **characterized in that**, the particles that provide said light scattering, are quantum dots, perovskite nanocrystals or carbon dots.

13. A method according to claim 1, **characterized in that**, the solution that comprises nanomaterials, biomaterials, dyestuff or light scattering particles, is dripped onto the surface comprising physically unclonable functions, then said solution is left to rest for 30 minutes to 3 hours and following this it is washed with water under sonication and thereby said surface that comprises unclonable functions, is functionalized.

14. A security label that is produced with a physically unclonable function (PUF), **characterized in that** it is obtained by a method according to claim 1.

## Patentansprüche

1. Verfahren zur Herstellung von physikalisch nicht klonbaren Funktionen (PUFs) und Sicherheitsetiketten, wobei es die folgenden Verfahrensschritte umfasst;
i. Beschichten einer festen Oberfläche (2) mit einer Dicke von 1-100 nm, um mit der Polymerlösung (1) einen Film zu erzeugen, der mit einer -OH-Gruppe abgeschlossen ist und dessen Wasserkontaktwinkel mindestens 60 Grad beträgt, wenn er auf die Oberfläche aufgetragen wird,
ii. Erhitzen des auf die Oberfläche aufgetragenen Polymerfilms, damit er sich mit einer kovalenten Bindung auf der festen Oberfläche (2) verbindet,
iii. Beschichten der festen Oberfläche (2), die mit einem Polymerfilm beschichtet wurde, mit einer Lösung von Polymeren (4), die reaktiven Gruppen enthalten, mit einer Dicke von 1-50 nm,
iv. Erzeugen einer physikalisch nicht klonbaren Funktion auf der Oberfläche durch Erhitzen der festen Oberfläche, die mit einer reaktive Gruppen enthaltenden Polymerlösung (4) beschichtet wurde, die zuvor mit einem Polymerfilm überzogen wurde,
v. Binden der chemischen Gruppen zur Wechselwirkung mit dem Polymer, die Nanomaterialien, Biomaterialien, Farbstoffe oder lichtstreuende Partikel umfassen, an physikalisch nicht klonbaren Funktionen (6) auf chemischem oder elektrostatischem Wege und Erstellen von Sicherheitsetiketten aus den Bildern, die durch einzigartige Strahlung, Lichtstreuung, Raman-Streuung und Dunkelfeldstreuung, die von den gebundenen Nanomaterialien bereitgestellt wird, erhalten werden.

2. Verfahren nach Anspruch 1, **dadurch gekennzeichnet, dass** in Schritt iii. die Lösung, die chemische Gruppen zur Wechselwirkung mit dem Polymer aufweist, die reaktive Gruppen umfassen, zusätzlich mit Nanomaterialien, Biomaterialien, Farbstoffen oder Partikeln gemischt wird, die für Lichtstreuung sorgen, und dann die genannte Lösung auf die feste Oberfläche aufgetragen wird, die zuvor mit einem Polymerfilm beschichtet wurde.

3. Verfahren nach Anspruch 1, **dadurch gekennzeichnet, dass** das Polymer, das mit einer - OH-Gruppe terminiert und einen Wasserkontaktwinkel von mindestens 60 Grad aufweist, wenn es auf die Oberfläche aufgetragen wird, Polystyrol ist.

4. Verfahren nach Anspruch 1, **dadurch gekennzeichnet, dass** das Polymer, das mit einer - OH-Gruppe terminiert ist und das einen Wasserkontaktwinkel von mindestens 60 Grad aufweist, wenn es auf die Oberfläche aufgetragen wird, eine Lösung ist, die durch Auflösen von Polystyrol erhalten wird, um eine Toluollösung von 0.5 Gew.-% - 5 Gew.-% zu erhalten.

5. Verfahren nach Anspruch 1, **dadurch gekennzeichnet, dass** die genannten Heizbedingungen zwischen 120-300°C liegen.

6. Verfahren nach Anspruch 1, **dadurch gekennzeichnet, dass** das genannte Polymer, das reaktive Gruppen enthält, Poly(2-vinylpyridin) oder Poly(4-vinylpyridin) ist.

7. Verfahren nach Anspruch 1, **dadurch gekennzeichnet, dass** die genannte Polymerlösung, die reaktive Gruppen enthält, eine Lösung ist, die durch Auflösen von Poly(2-vinylpyridin) oder Poly(4-vinylpyridin) erhalten wird, so dass eine N,N-Dimethylformamid (DMF)-Lösung mit 0.25 Gew.-% bis 3 Gew.-% entsteht.

8. Verfahren nach Anspruch 1, **dadurch gekennzeichnet, dass** die genannte Beschichtung im Sprüh- oder Tropfverfahren durchgeführt wird.

9. Verfahren nach Anspruch 1, **dadurch gekennzeichnet, dass** die genannten Nanomaterialien Nanomaterialien wie kugelförmige Gold-Nanopartikel, kugelförmige Silber-Nanopartikel, CdSe-Quantenpunkte, Platin-Nanopartikel, Titandioxid-Nanopartikel und Gold-Nanostäbchen oder Nanopartikel mit fluoreszierenden Eigenschaften sind.

10. Verfahren nach Anspruch 1, **dadurch gekennzeichnet, dass** das genannte Biomaterial ein Protein mit DNA oder fluoreszierenden Eigenschaften ist, das mit einem Farbstoff markiert wurde.

11. Verfahren nach Anspruch 1, **dadurch gekennzeichnet, dass** der genannte Farbstoff ein Rhodamin, Methylenblau oder ein grün strahlendes Protein ist.

12. Verfahren nach Anspruch 1, **dadurch gekennzeichnet, dass** die Teilchen, die die genannte Lichtstreuung bewirken, Quantenpunkte, Perowskit-Nanokristalle oder Kohlenstoffpunkte sind.

13. Verfahren nach Anspruch 1, **dadurch gekennzeichnet, dass** die Lösung, die Nanomaterialien, Biomaterialien, Farbstoffe oder lichtstreuende Partikel enthält, auf die Oberfläche mit physikalisch nicht klonbaren Funktionen getropft wird, dann die Lösung 30 Minuten bis 3 Stunden ruhen gelassen wird und anschließend mit Wasser unter Beschallung gewaschen wird und dadurch die Oberfläche mit nicht klonbaren Funktionen funktionalisiert wird.

14. Sicherheitsetikett, das mit einer physikalisch nicht klonbaren Funktion (PUF) hergestellt ist, **dadurch gekennzeichnet, dass** es durch ein Verfahren nach Anspruch 1 erhalten wird.

## Revendications

1. Méthode de production de fonctions physiquement inclonables (PUFs) et d'étiquettes de sécurité, dans laquelle elle comprend les étapes suivantes,
i. Enduire sur une surface solide (2) de manière à avoir une épaisseur comprise entre 1-100 nm afin de créer un film avec la solution de polymère (1) qui est terminée par un groupe -OH, dont l'angle de contact avec l'eau est d'au moins 60 degrés lorsqu'il est enduit sur la surface,
ii. Chauffer le film polymère qui a été enduit sur la surface afin qu'il se lie avec une liaison covalente sur la surface solide (2),
iii. Enduire la surface solide (2) qui a été enduite avec un film polymère, avec une solution de polymères (4) qui contient des groupes réactifs, pour avoir une épaisseur de 1-50 nm,
iv. Créer une fonction physiquement inclonable sur la surface en chauffant la surface solide qui a été enduite avec une solution polymère (4) contenant des groupes réactifs, qui a été préalablement enduit avec un film polymère,
v. Lier les groupes chimiques pour interagir avec le polymère, comprenant des nanomatériaux, des biomatériaux, des colorants ou des particules qui assurent la diffusion de la lumière, à des fonctions physiquement inclonables (6) chimiquement ou électrostatiquement, et établir des étiquettes de sécurité à partir des images obtenues par un rayonnement unique, la diffusion de la lumière, la diffusion Raman et la diffusion en champ sombre qui est assurée par les nanomatériaux liés.

2. Méthode selon la revendication 1, **caractérisée en ce que**, dans l'étape iii., la solution ayant des groupes chimiques pour interagir avec le polymère, comprenant des groupes réactifs est en outre mélangée avec des nanomatériaux, des biomatériaux, des colorants ou des particules qui assurent la diffusion de la lumière et puis ladite solution est enduite sur la surface solide qui a été préalablement enduite avec un film de polymère.

3. Méthode selon la revendication 1, **caractérisée en ce que**, le polymère qui est terminé par un groupe -OH et qui a un angle de contact avec l'eau d'au moins 60 degrés lorsqu'il est enduit sur la surface, est le polystyrène.

4. Méthode selon la revendication 1, **caractérisée en ce que**, le polymère qui est terminé par un groupe -OH et qui a un angle de contact avec l'eau d'au moins 60 degrés lorsqu'il est enduit sur la surface, est une solution qui est obtenue en dissolvant du polystyrène de manière à obtenir une solution de toluène de 0.5% - 5% en poids.

5. Méthode selon la revendication 1, **caractérisée en ce que**, lesdites conditions de chauffage sont comprises entre 120-300°C.

6. Méthode selon la revendication 1, **caractérisée en ce que**, ledit polymère qui contient des groupes réactifs est une poly(2-vinylpyridine) ou une poly(4-vinylpyridine).

7. Méthode selon la revendication 1, **caractérisée en ce que**, ladite solution de polymère qui contient des groupes réactifs est une solution qui est obtenue en dissolvant le poly(2-vinylpyridine) ou le poly(4-vinylpyridine) de manière à avoir une solution de N,N diméthylformamide (DMF) de 0.25%-3% en poids est établie.

8. Méthode selon la revendication 1, **caractérisée en ce que**, ledit enduit est effectué par une méthode de pulvérisation ou d'égouttage.

9. Méthode selon la revendication 1, **caractérisée en ce que**, lesdits nanomatériaux sont des nanomatériaux tels que des nanoparticules d'or sphériques, des nanoparticules d'argent sphériques, des points quantiques de CdSe, des nanoparticules de platine, des nanoparticules de dioxyde de titane et des nanobâtonnets d'or ou des nanoparticules qui ont des propriétés fluorescentes.

10. Méthode selon la revendication 1, **caractérisée en ce que**, ledit biomatériau est une protéine ayant un ADN ou des propriétés fluorescentes qui ont été marquées avec un colorant.

11. Méthode selon la revendication 1, **caractérisée en ce que**, ledit colorant est la rhodamine, le bleu de méthylène ou la protéine verte rayonnante.

12. Méthode selon la revendication 1, **caractérisée en ce que**, les particules qui assurent ladite diffusion de la lumière sont des points quantiques, des nanocristaux de pérovskite ou des points de carbone.

13. Méthode selon la revendication 1, **caractérisée en ce que**, la solution qui comprend des nanomatériaux, des biomatériaux, des colorants ou des particules diffusant la lumière est égouttée sur la surface comprenant des fonctions physiquement inclonables, puis ladite solution est laissée au repos pendant 30 minutes à 3 heures et suite à cette, elle est lavée à l'eau sous sonication et ainsi ladite surface qui comprend des fonctions inclonables est fonctionnalisée.

14. Étiquette de sécurité qui est produite avec une fonction physiquement inclonable (PUF), **caractérisée en ce qu'**elle est obtenue par une méthode selon la revendication 1.
